# EUROPEAN PATENT SPECIFICATION

(11) **EP 4 184 657 B1**
(45) Date of publication and mention of the grant of the patent: **05.06.2024**
(21) Application number: 21209533.5
(22) Date of filing: 22.11.2021
(51) Int. Cl.: H01M 10/613

(54) **SYSTEM FOR BATTERY PACK THERMAL MANAGEMENT**
SYSTEM ZUR THERMISCHEN VERWALTUNG EINES BATTERIEPACKS
SYSTÈME DE GESTION THERMIQUE DE BLOC-BATTERIE

(43) Date of publication of application: 24.05.2023
(73) Proprietor: Valmet Automotive EV Power Oy, 24100 Salo (FI)
(72) Inventor: Kopra, Lasse, 23200 Vinkkilä (FI)
(74) Representative: Papula Oy

(56) References cited:
- EP-B1- 3 246 978
- GB-A- 2 562 456
- US-A1- 2021 013 480

## Description

### FIELD OF THE INVENTION

Various example embodiments generally relate to a battery pack. Some example embodiments relate to at least partially the battery pack thermal management.

### BACKGROUND OF THE INVENTION

The operation life of rechargeable battery cells is significantly depending on the temperature of the battery cells during their operation life. In order to obtain a longest possible operation life for battery cells their operating temperature should be maintained on a certain level or within a certain temperature range during operation. The battery cells thermal management may be however further improved. An example of a battery pack can be seen in GB 2562456 A.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure may extend operational life of battery cells. Also the number of usable recharge or discharge cycles may increase. In addition, it may be possible to recharge and discharge the battery cells faster, while remaining sufficiently close to the optimal temperature. These and other benefits may be achieved by the features of the independent claims. Further advantageous implementation forms are provided in the dependent claims, the description, and the drawings.

According to a first aspect, a system for battery pack thermal management, wherein the battery pack may comprise at least one cell stack comprising a plurality of battery cells arranged in the cell stack, wherein the system may comprise: a cooling element arranged at least on a top face of the battery cells and may comprise a first heat exchange surface and second heat exchange surface opposite the first heat exchange surface, wherein the cooling element may comprise at least one extension arranged on the first exchange surface; the first heat exchange surface may be configured to be in thermal contact with at least one battery cell busbar and heat producing hotspot area of the battery cell casing; the second heat exchange surface may be configured to be in thermal contact with at least one electrical circuit component of the battery pack; and thermal energy may be configured to be conducted from the at least one battery cell busbar, heat producing hotspot area of the battery cells, and at least one electrical circuit component to the cooling element.

According to an example embodiment of the first aspect, the first heat exchange surface may be further configured to be in thermal contact with battery cell terminals.

According to an example embodiment of the first aspect, wherein the at least one electrical circuit component may comprise at least one of the following: fuses, connectors, busbars, contactors, and/or circuit boards.

According to an example embodiment of the first aspect, wherein the cooling element may further comprise at least one thermal transfer channel configured to form a flow channel for thermal transfer medium, and the thermal transfer channel may be configured to be located between the first and second heat exchange surfaces, or on the first or second heat exchange surface.

According to an example embodiment of the first aspect, wherein the cooling element may be made of at least two metal sheets connected together, wherein the thermal transfer channel may be formed between the at least two metal sheets; or by aluminum extrusion with a machined groove, wherein a pipe may be configured to be pressed into the groove for forming the thermal transfer channel; or a lid may be added on the groove to form the thermal transfer channel; or the groove may be formed partly by the lid.

According to the invention the extension of the cooling element comprises at least one fin.

According to an example embodiment of the first aspect, wherein the at least one fin may be configured to cover at least partly at least of one end face of the at least one battery cell and be in thermal contact with at least one hotspot area of the at least one battery cell end face.

According to an example embodiment of the first aspect, wherein the at least one fin may comprise at least one thermal transfer channel.

According to an example embodiment of the first aspect, wherein the system may comprise interface material between the cooling element and the at least one battery cell busbar and/or heat producing hotspot area of the battery cells; and/or the electrical circuit components.

According to an example embodiment of the first aspect, wherein the interface material may comprise heat-conducting filler material and/or electrically insulating material positioned between the cooling element and the at least one battery cell busbar and/or heat producing hotspot area of the battery cells; and/or the electrical circuit components of the battery pack.

According to an example embodiment of the first aspect, wherein the heat-conducting filler material may comprise at least one of the following: curing paste, gap filler, gap pad, and/or adhesive; and/or the electrically insulating material may comprise thin foil, polymer, and/or paint.

According to an example embodiment of the first aspect, wherein the cooling element may be a fixing element of the battery cells or part of a battery cell fixing system.

According to an example embodiment of the first aspect, wherein the system may comprise interface material between the cooling element, the at least one battery cell busbar, and/or heat producing hotspot area of the battery cell casing, wherein the thermal interface material may comprise thermal conductive adhesive or filling material configured to integrate thermal conductivity and fixing the battery cells together and/or the cooling element to the battery cells.

According to a second aspect, a battery pack may comprise a system according to any one of the above embodiments.

According to a third aspect, a method for assembling a system for a battery pack thermal management may comprise: arranging at least one cell stack within an interior space of a battery pack housing, wherein the at least one cell stack may comprises a plurality of battery cells arranged in the cell stack; arranging a cooling element to at least on a top face of the battery cells, wherein the cooling element may comprise a first heat exchange surface and second heat exchange surface opposite the first heat exchange surface, and wherein the cooling element may comprise at least one extension arranged on the first exchange surface; configure the first heat exchange surface to be in thermal contact with at least one battery cell busbar and heat producing hotspot area of a battery cell casing; configure the second heat exchange surface to be in thermal contact with at least one electrical circuit component of the at least one battery cell; and configure thermal energy conduction from the at least one battery cell busbar, heat producing hotspot area of the battery cell, and at least one electrical circuit component to the cooling element.

### BRIEF DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
Fig. 1 illustrates a schematic drawing of a system comprising cooling element assembled on two cell stacks in which examples of disclosed embodiments may be applied;
Fig. 2 illustrates is a perspective view of a battery cell in which examples of disclosed embodiments may be applied;
Fig. 3 illustrates a cross section view of the system according to Fig. 1 in which examples of disclosed embodiments may be applied; and
Fig. 4 illustrates an example for assembling a system for a battery pack thermal management, according to an example embodiment.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps or operations for constructing and operating the example. However, the same or equivalent functions and sequences may be accomplished by different examples.

The performance of a battery pack is determined by a weakest battery cell. Therefore, uniform ageing and decrease in performance are important for utilizing the battery pack as efficiently as possible. If some cells in the battery pack, for example battery cells in certain positions, may age faster than others, all battery cells may be replaced when the performance of the first ones deteriorates below a predetermined threshold. A system according to the present disclosure might therefore have the advantage of improving the material usage of the battery cells, since a larger proportion of the battery cells might serve a larger portion of their inherent usage life and may not be prematurely replaced.

Recharging or discharging battery cells may create thermal energy which may have to be conducted from the cells as effectively as possible. During charging or discharging of a battery, internal resistances of the battery cell terminals, current collectors, and electrodes may form waste energy which transforms to heat. This heat should also be conducted away. So, the most effective way of cooling would be cooling directly from the battery terminals, and upper part of the battery cells. However, a great short-circuit risk may cause a big challenge for this type of cooling.

As temperature fluctuations or being at high temperatures accelerate the ageing of the battery cells, maintaining all the battery cells as close to the optimum temperature as possible may be a key parameter for increasing the life of a battery pack. A more uniform temperature difference between the battery cells and the thermal transfer medium above the battery cells may allow better optimization of the functional parameters of the thermal transfer medium, such as temperature and flow speed, to maintain the battery cells close to the optimal temperature.

According to an example embodiment, the system concerns about an effective lithium-ion (li-ion) battery cell and complete energy storage thermal management system through a battery cell terminal cooling lay-out which also allows power electronics and busbars thermal management. The biggest factor in lithium-ion battery cell aging may be its temperature during the complete lifetime. The usable lifetime of the lithium-ion battery cell may be multiplied by a proper thermal management. A complete system solution may require additionally thermal management of other heat producing components of the system like electronics, connections, and current carrying busbars, specially of the ones which have connection to the battery cells. The battery cell terminals may be in straight contact through metallic materials to electrodes where the heat may be produced during battery operation. Terminal cooling may be a very effective way to manage the temperature of the cell internals, where the heat may be produced. However, high voltage levels and electrical insulation requirements may make cooling through the terminals complex. In addition, current collectors may cause electrical resistance and thus produce heat. In a prismatic battery cell, the current collectors may be located close to the terminals in the upper parts of the battery cell, for example close to the upper half of the end faces of the battery cell. As this part the battery cell may heat up clearly more than other parts and it may be beneficial to control the temperature of this location also.

According to an example embodiment, the system may combine liquid cooling of the battery cell terminals, busbars and other battery cell can hot spots through a battery cell can. On the other side of a liquid cooling element, on the top side additionally other functional parts, like power electronics and other electric circuit components may be thermally managed. The cooling element may be made of aluminum extrusion where an aluminum pipe may be integrated and pressed to a groove. The terminal cooling challenges like electrical insulation may be solved in a simple way which may suit serial production.

According to an example embodiment, the cooling system may provide significant advantage over methods, where for example, only cell bottom or side is cooled, or cells are submerged to an electrically insulating cooling liquid. Such systems may be heavy due to the needed amount of liquid and have for example, a high contamination risk which could cause liquid losing its electrical insulation properties. The system may provide a highly integrated thermal management solution which still may also leave cell bottom area free where some other thermal management system solutions for example, passive cooling solution, or cell fixing solutions may still be implemented.

Example embodiments relate to a system for a battery pack thermal management, wherein the battery pack comprising at least one cell stack arranged within an interior space of a battery pack housing, and wherein the at least one cell stack comprises a plurality of battery cells arranged in the cell stack.

More particularly the cooling element may comprise at least one extension arranged on the first exchange surface, the first heat exchange surface may be configured to be in thermal contact with at least one battery cell busbar and heat producing hotspot area of a battery cell casing, the second heat exchange surface may be configured to be in thermal contact with at least one electrical circuit component of the battery pack, and thermal energy may be configured to be conducted from the at least one battery cell busbar, heat producing hotspot area of the battery cells, and at least one electrical circuit component to the cooling element.

According to an example embodiment, a battery pack is a complete set of battery cells of a device, such as an industrial apparatus or a vehicle. The battery pack may further comprise other necessary elements to operate the battery cells of the device. The battery pack may comprise a housing wherein one or more cell stacks may be inserted. The housing is for example, a rigid die cast housing or a welded structure.

The cell stack may comprise a plurality of battery cells arranged in the cell stack and forming a cell set. The battery cells are for example, re-chargeable li-ion battery cells. The battery cells may all have the same shape, electrochemistry, and dimensions. The shape of the battery cells may be prismatic, pouch, or similarly shaped battery cells. A housing of the battery cell may be made of metal having good thermal conductivity.

The battery cell may comprise six substantially flat faces each at a right angle to the neighboring faces. Two of the faces, termed side faces may be larger than the rest of the faces. One of the smaller faces, top face may comprise the battery cell terminals, through which the battery cell may be recharged and discharged. The face opposite and parallel to the top face may be termed a bottom face. The bottom face may be positioned towards a base portion of the housing. The bottom face may comprise glue, tape or other attachment means for fastening the battery cell to the battery pack housing. Alternatively, the attachment means may be placed on the housing before inserting the cell stack. The properties of the attachment means preferably allow efficient heat transfer between the bottom face of the battery cell and the housing of the battery pack. The two remaining faces may be termed end faces.

According to an example embodiment, the system comprises a cooling element arranged at least on a top face of the battery cells and comprising a first heat exchange surface and second heat exchange surface opposite the first heat exchange surface. According to an example embodiment, the cooling element further comprising at least one thermal transfer channel configured to form a continuous flow channel for thermal transfer medium. The thermal transfer channel may be configured to be located between the first and second heat exchange surfaces, or on the first or second heat exchange surface. The cooling element may be made of heat-conducting metal, such as aluminum or copper. The cooling element may be made of for example, extruded aluminum or aluminum alloy. The cooling element may comprise anodized aluminum. Anodizing may contribute to the electrical insulation between the battery cells and the metal profile.

According to an example embodiment, the cooling element is made of by aluminum extrusion with a machined groove, wherein a pipe is configured to be pressed into the groove for forming the thermal transfer channel, or a lid is added on the groove to form the thermal transfer channel. The groove may also be formed partly by the lid. The lid may be for example, welded on its place. The thermal transfer channels may also be formed from plastic which would be fixed tightly to the metal part providing needed thermally conductive part of the cooling element

According to an example embodiment, the cooling element is made of at least two metal sheets connected together, wherein the thermal transfer channel may be formed between the at least two metal sheets. According to an example embodiment, the cooling element may be made of two or more layers of sheet metal providing liquid cavities, wherein the cooling element may be bent to meet the cell surface hot spots. The sheets may be for example, aluminum sheets pressed, brazed, glued, or welded together to form at least one thermal transfer channel. The thermal transfer channels may also be formed beforehand or after fixing the sheets together with for example, pressurized air. In addition, other material than metal may be used to provide the needed channel for example, plastic.

According to an example embodiment, the cooling element first heat exchange surface is placed on terminal side of the battery cells in contact through interface material to cell busbars and/or cell terminals. The cooling element may also have a contact to battery cell outer surface heat producing hotspot areas with at least one extension shape or fin that may be located on at least one battery cell end face or top face. At least one extension shape or fin may be formed from the same material as the first surface. There may not be a gap or material discontinuity between the first surface and the at least one extension shape or fin. Thus, the material may continue without gaps or discontinuity from the first surface to the at least one fin. The cooling element may be made of thermally conductive material. Liquid or gas may run in the thermal transfer channel. The liquid may be coolant or refrigerant.

According to an example embodiment, the cooling element comprising at least one extension arranged on the first exchange surface. The extension may be located on the lower side of the first exchange surface. The extension may be located for example to point towards at least one of the following: one battery cell busbar, battery cell terminal, and/or heat producing hotspot area of the battery cells.

On the other surface, second surface of the cooling element there may be other electrical circuit components connected with thermally conductive contact to manage their temperature. The cooling element may also act as a fixing structure for the electrical circuit components. Thus the cooling element may be located above and/or at least partly around the battery cells upper parts, between the battery cell busbars and hotspot areas of the battery cells, and the electrical circuit components of the battery pack.

According to an example embodiment, the battery cells hotspot areas comprising heat producing surfaces of upper parts of battery cells. The upper parts of battery cells may be the top face and at least the upper parts of end faces. The upper parts of battery cells may be at least the upper half of the end faces. According to an example embodiment, the electrical circuit components comprising at least one of the following: fuses, connectors, busbars, contactors, and/or circuit boards.

According to an example embodiment, the cooling element is a fixing element of the electrical circuit components and/or battery cells, or a part of a battery cell fixing system. Thus, the electrical circuit components may be attached on the second, upper heat exchange surface of the cooling element. Also the battery cells may be attached to the cooling element first, lower heat exchange surface.

According to an example embodiment, the interface material comprise conductive adhesive material configured to integrate thermal conductivity and fixing the battery cells together, and/or the battery cells and/or electrical circuit components to the cooling element.

According to the invention, the extension of the cooling element comprising at least one fin. According to an example embodiment, the at least one fin is configured to cover at least partly at least of one end surface of the at least one battery cell, and to be in thermal contact with at least one hotspot area of the at least one battery cell end face. Thus, the at least one fin may be folded, and it may extend at least partially to the upper part or upper half of at least one end face of at least one battery cell. The fin may be turned downwards towards the bottom of the housing. Folding of the fin may allow the fin to be in thermal contact with the hotspot areas of the battery cell end faces. The at least one fin may be located between two cell stacks and/or between the cell stack and the battery housing. The at least one fin may be located between at least one cell stack side and/or end surface. Also other extensions may be located on the cooling element. For example the first and/or second heat exchange surface may have fins that extend towards the hotspot areas of the battery cells, battery busbars, or the electrical circuit components of the battery pack. This means that there may be at least one extension on the first heat exchange surface that extend towards battery cell terminals, battery cell busbars, and/or other heat producing surfaces located on the top surface of the at least one battery cell. This may have the advantage that the cooling element may extend very close to the areas where the battery cells produce most of the heat and thus may be able to cool those areas effectively.

According to an example embodiment, the at least one extension or fin comprising at least one thermal transfer channel. This may further enhance cooling of the battery cell busbars, hotspot areas, and/or electrical circuit components because the thermal transfer medium brings cooling effect closer to the areas needed to be cooled.

According to an example embodiment, the thermal contact between the cooling element and battery cell busbars and the hotspot areas, and/or the electrical circuit components is at least partly mediated by interface material. According to an example embodiment, the system comprising interface material between the cooling element and the at least one battery cell busbar and/or heat producing hotspot area of the battery cells. According to an example embodiment, the system comprising interface material between the cooling element and the electrical circuit components.

According to an example embodiment, the interface material comprise heat-conducting filler material and/or electrically insulating material positioned between the cooling element and the at least one battery cell busbar, heat producing hotspot area of the battery cells, and/or the electrical circuit components of the battery pack. The interface material may improve thermal transfer between the cooling element and the battery cell busbars and hotspot areas of the battery cells, and/or the electrical circuit components of the battery pack while keeping electrical insulation sufficiently high. According to an example embodiment, the heat-conducting filler material comprise at least one of the following: curing paste, gap filler, gap pad, and/or adhesive. According to an example embodiment, the electrically insulating material comprise thin foil, polymer, and/or paint. The polymer material is for example, plastic or cellulose. The plastic material is for example, plastic part.

According to an example embodiment, by heat-conducting filler material is herein meant material that conducts heat and is formable. By formable material is meant material that may fill the gaps between the battery cells and the metal profile when the cooling element comprising extensions, for example, fins may be pressed against the battery cells. A part of the filler material may be pressed out from between the cooling element and the battery cells, but the filler material may be retained at least in the locations where surface unevenness causes gaps or pockets to remain. Without the heat-conducting filler material, air may remain in these positions. As air is a poor heat conductor, this reduces the efficiency of thermal transfer. When the space may be filled with filler material, the heat transfer may remain satisfactory. Therefore, any material whose heat conductance may exceed that of air, may improve the thermal control of battery cells.

The battery cells and the cooling element need to be well enough electrically isolated from each other. This is challenging from the perspective of heat transfer efficiency, since good heat conductors are often also electrically conducting. In the current disclosure, electrically insulating material may be used between the battery cells and the cooling element to ascertain electrical insulation during the operational life of the battery cells. The electrically insulating material may be formed of one piece or combined from several pieces.

Thickness of the electrically insulating material depends on its composition and the voltage of the battery cells. The better the material may insulate the thinner layer may be needed for achieving sufficient insulation with a given battery voltage. The thinner the layer of electrically insulating material is, the less it interferes with the thermal transfer between the battery cell and the metal profile. Thus, as thin a layer as possible is advantageous from thermal transfer perspective.

According to an example embodiment, the electrically insulating material is an electrically insulating film, paint, or fiber material embedded with electrically insulating material. The electrically insulating films may be described as thin continuous polymeric materials.

According to an example embodiment, a battery pack comprising a system for battery pack thermal management according to the embodiments described above.

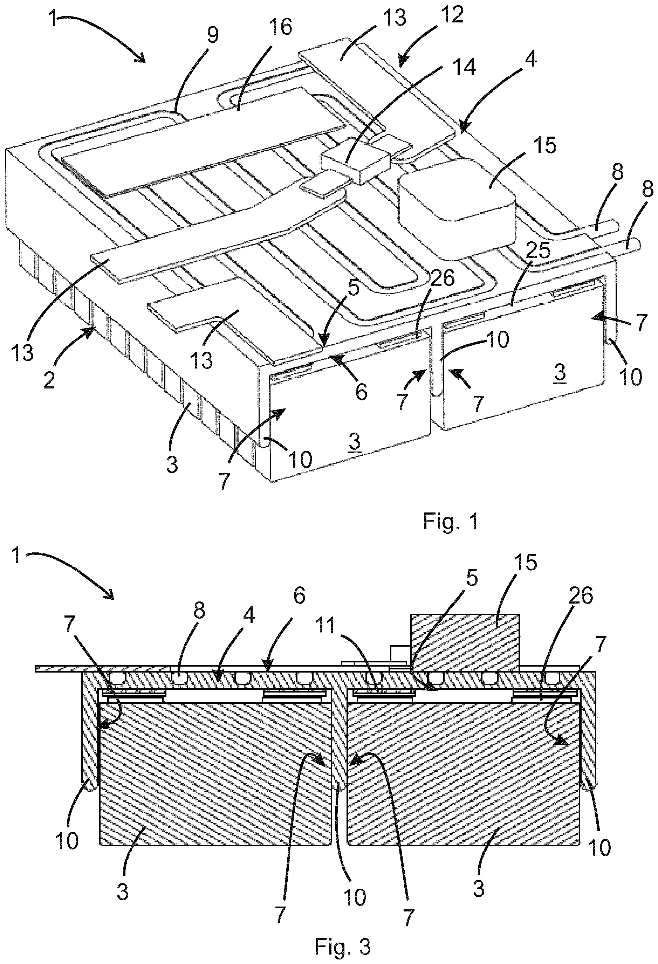

Fig. 1 is only showing some elements and functional entities, whose implementation may differ from what is shown. It is apparent to a person skilled in the art that the system 1 may comprise also other functions and structures than those shown in Fig. 1.

The embodiments are not, however, restricted to the system 1 given as an example but a person skilled in the art may apply the solution to other systems provided with necessary properties.

Fig. 1 illustrates a schematic drawing of a system comprising cooling element assembled on two cell stacks in which examples of disclosed embodiments may be applied. Fig. 3 illustrates a cross section view of the system 1 according to Fig. 1 in which examples of disclosed embodiments may be applied.

According to an example embodiment, the at least one cell stack 2 comprises a plurality of battery cells 3 arranged in the cell stack 2. The battery pack may comprise at least one cell stack arranged within an interior space of a battery pack housing.

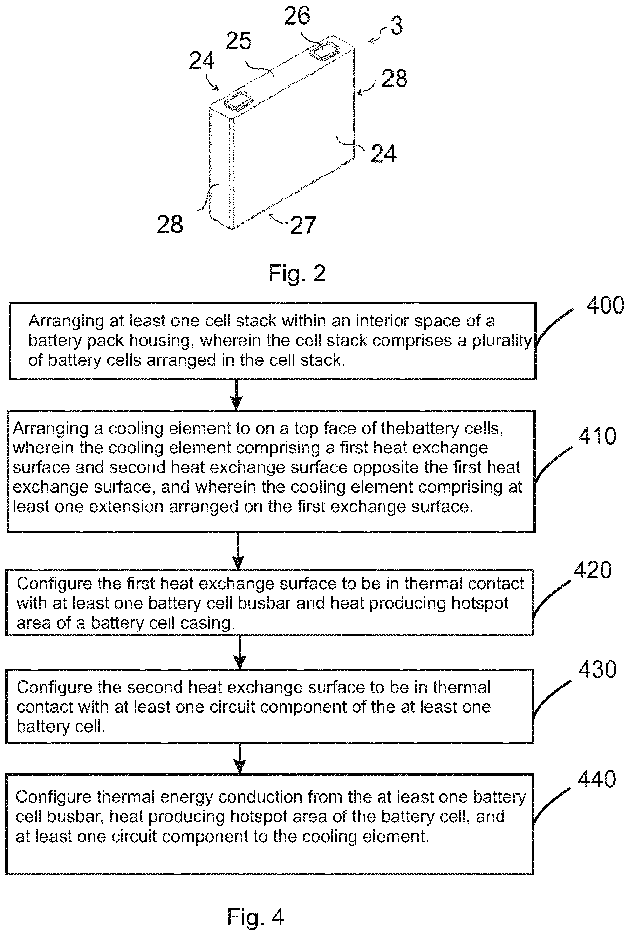

Fig. 2 illustrates a perspective view of a battery cell 3 in which examples of disclosed embodiments may be applied. The battery cell 3 may comprise six substantially flat faces each at a right angle to the neighboring faces. Two of the faces, termed side faces 24 may be larger than the rest of the faces. One of the smaller faces, top face 25 may comprise the battery cell terminals 26. The face opposite and parallel to the top face may be termed a bottom face 27. The bottom face 27 may be positioned towards a base portion of the housing 6. The two remaining faces may be termed end faces 28.

An example of Fig. 1 shows that the system 1 may comprise a cooling element 4 arranged at least on a top face 25 of the battery cells 3 and comprising a first heat exchange surface 5 and second heat exchange surface 6 opposite the first heat exchange surface 5. According to an example embodiment, the cooling element 4 further comprising at least one thermal transfer channel 8 configured to form a continuous flow channel for thermal transfer medium. The thermal transfer channel 8 may be configured to be located between the first and second heat exchange surfaces 5,6, or on the first or second heat exchange surface 5,6. For example, plastic or metal may be used to provide the needed thermal transfer channel 8. The cooling element 4 may be made of heat-conducting metal, such as aluminum or copper.

According to an example embodiment, the cooling element first heat exchange surface 5 is placed on terminal side of the battery cells 3 in contact through interface material to cell busbars 11 and/or cell terminals 26. The cooling element 4 may also have a contact to battery cell outer surface heat producing hotspot areas 7 with at least one extension shape or fin 10 that may be located on at least one battery cell end face 28 or top face 25. The fin 10 that may be located on upper half of the at least one battery cell end face 28. The cooling element 4 may be made of thermally conductive material. Liquid may run in the thermal transfer channel 8. The liquid may be coolant or refrigerant.

According to an example embodiment, the cooling element 4 comprising at least one extension arranged on the first exchange surface 5. The extension may be located on the lower surface of the first exchange surface 5. The extension may be located for example to point towards at least one of the following: one battery cell busbar 11, battery cell terminal 25, and/or heat producing hotspot area 7 of the battery cell 3. The at least one fin 10 may be located between two cell stacks 2 and/or between the cell stack 2 and the battery housing. The at least one fin 10 may be located between at least one cell stack side and/or end surface.

On the other surface, second surface 6 of the cooling element 4 there may be other electrical circuit components 12 connected with thermally conductive contact to manage their temperature. The cooling element 4 may also act as a fixing structure for the electrical circuit components 12. Thus the cooling element 4 may be located above and/or at least partly around the battery cells upper parts, between the battery cell busbars 11 and hotspot areas 7 of the battery cells 3, and the electrical circuit components 12 of the battery pack.

According to an example embodiment, the battery cells hotspot areas 7 comprising heat producing surfaces of upper parts of battery cells 3. The upper parts of battery cells are the top face 25 and at least the upper parts of end faces 28.

According to an example embodiment, the electrical circuit components 12 comprising at least one of the following: fuses 14, connectors, busbars 13, contactors 15, and/or circuit boards 16.

According to an example embodiment, the cooling element 4 is a fixing element of the electrical circuit components 12 and/or battery cells 2, or a part of a battery cell fixing system. Thus, the electrical circuit components 12 may be attached on the second, upper heat exchange surface 6 of the cooling element 4. The battery cells 3 may be attached to the cooling element first, lower heat exchange surface 5.

According to an example embodiment, the interface material comprise conductive adhesive material configured to integrate thermal conductivity and fixing the battery cells 3 together, and/or the battery cells 3 and/or electrical circuit components 12 to the cooling element 4.

According to an example embodiment, the extension of the cooling element 4 comprising at least one fin 10 or protrusion. According to an example embodiment, the at least one fin 10 is configured to cover at least partly at least of one end surface 28 of the at least one battery cell 3, and to be in thermal contact with at least one hotspot area 7 of the at least one battery cell end face 28. Thus, the at least one fin 10 may be folded, and it may extend at least partially to the upper part of at least one end face 28 of at least one battery cell 3. The fin 10 may be turned downwards towards the bottom of the battery cell housing. Folding of the fin 10 may allow the fin 10 to be in thermal contact with the hotspot areas 7 of the battery cell end faces 28. Also other extensions may be located on the cooling element. For example the first and/or second heat exchange surface 5,6 may have extensions or fins 10 that extend towards the hotspot areas 7 of the battery cells 3, battery busbars 11, or the electrical circuit components 12 of the battery pack. This means that there may be at least one extension on the first heat exchange surface 5 that extend towards battery cell terminals 26, battery cell busbars 11, and/or other heat producing surfaces located on the top face 25 of the at least one battery cell 3. According to an example embodiment, the at least one extension or fin 10 comprising at least one thermal transfer channel 8.

According to an example embodiment, the thermal contact between the cooling element 4 and battery cell busbars 11 and the hotspot areas 7, and/or the electrical circuit components 12 is at least partly mediated by interface material. According to an example embodiment, the system 1 comprising interface material between the cooling element 4 and the at least one battery cell busbar 11, and/or heat producing hotspot area 7 of the battery cells 3. According to an example embodiment, the system 1 comprising interface material between the cooling element 4 and the electrical circuit components 12.

According to an example embodiment, the interface material comprise heat-conducting filler material and/or electrically insulating material positioned between the cooling element 4 and the at least one battery cell busbar 11 and heat producing hotspot area 7 of the battery cells 3. According to an example embodiment, the interface material comprise heat-conducting filler material and/or electrically insulating material positioned between the electrical circuit components 12 of the battery pack.

Fig. 4 illustrates an example of for assembling a system for a battery pack thermal management, according to an example embodiment.

At operation 400, the method may comprise arranging at least one cell stack 2 within an interior space of a battery pack housing, wherein the at least one cell stack 2 comprises a plurality of battery cells 3 arranged in the cell stack 2.

At operation 410, the method may comprise arranging a cooling element 4 to at least on a top face 25 of the battery cells 3, wherein the cooling element 4 comprising a first heat exchange surface 5 and second heat exchange surface 6 opposite the first heat exchange surface 5, and wherein the cooling element 4 comprising at least one extension arranged on the first exchange surface 5.

At operation 420, the method may comprise configure the first heat exchange surface 5 to be in thermal contact with at least one battery cell busbar 11 and heat producing hotspot area 7 of the battery cell casing.

At operation 430, the method may comprise configure the second heat exchange surface 6 to be in thermal contact with at least one electrical circuit component 12 of the at least one battery cell 12.

At operation 440, the method may comprise configure thermal energy conduction from the at least one battery cell busbar 11, heat producing hotspot area 7 of the battery cell 3, and electrical circuit component 12 to the cooling element 4.

Further features of the method directly result for example from the functionalities and parameters of the system 1 and battery pack as described in the appended claims and throughout the specification and are therefore not repeated here. Different variations of the methods may be also applied, as described in connection with the various example embodiments.

A system 1 and battery pack may be configured to perform or cause performance of any aspect of the methods described herein.

Any range or value given herein may be extended or altered without losing the effect sought. Also, any embodiment may be combined with another embodiment unless explicitly disallowed.

The specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments.

## Claims

1. A system for battery pack thermal management, wherein the battery pack comprising at least one cell stack comprising a plurality of battery cells arranged in the cell stack, wherein the system comprising
a cooling element arranged at least on a top face of the battery cells and comprising a first heat exchange surface and second heat exchange surface opposite the first heat exchange surface, wherein
the cooling element comprising at least one extension arranged on the first exchange surface;
the first heat exchange surface is configured to be in thermal contact with at least one battery cell busbar and heat producing hotspot area of the battery cell casing;
the second heat exchange surface is configured to be in thermal contact with at least one electrical circuit component of the battery pack;
thermal energy is configured to be conducted from the at least one battery cell busbar, heat producing hotspot area of the battery cells, and at least one electrical circuit component to the cooling element; and
the extension of the cooling element comprising at least one fin.

2. The system according to claim 1, wherein the first heat exchange surface is further configured to be in thermal contact with battery cell terminals.

3. The system according to claim 1 or claim 2, wherein the at least one electrical circuit component comprising at least one of the following: fuses, connectors, busbars, contactors, and/or circuit boards.

4. The system according to any of claims 1 to 3, wherein the cooling element further comprising at least one thermal transfer channel configured to form a flow channel for thermal transfer medium, and
the thermal transfer channel is configured to be located
between the first and second heat exchange surfaces,
or
on the first or second heat exchange surface.

5. The system according to any of claims 1 to 4, wherein the cooling element is made
of at least two metal sheets connected together, wherein the thermal transfer channel is formed between the at least two metal sheets; or
by aluminum extrusion with a machined groove,
wherein
a pipe is configured to be pressed into the groove for forming the thermal transfer channel; or
a lid is added on the groove to form the thermal transfer channel; or
the groove may be formed partly by the lid.

6. The system according to any of the preceding claims, wherein the at least one fin is configured to
cover at least partly at least of one end face of the at least one battery cell, and
be in thermal contact with at least one hotspot area of the at least one battery cell end face.

7. The system according to any of the preceding claims, wherein the at least one fin comprising at least one thermal transfer channel.

8. The system according to any of claims 1 to 7, wherein the system comprising interface material between the cooling element and
the at least one battery cell busbar and/or heat producing hotspot area of the battery cells; and/or
the electrical circuit components.

9. The system according to claim 8, wherein the interface material comprising heat-conducting filler material and/or electrically insulating material positioned between the cooling element and
the at least one battery cell busbar and/or heat producing hotspot area of the battery cells; and/or
the electrical circuit components of the battery pack.

10. The system according to claim 9, wherein
the heat-conducting filler material comprising at least one of the following: curing paste, gap filler, gap pad, and/or adhesive; and/or
the electrically insulating material comprising thin foil, polymer, and/or paint.

11. The system according to any of claims 1 to 10, wherein the cooling element is a fixing element of the battery cells or part of a battery cell fixing system.

12. The system according to claim 11, wherein the system comprising interface material between the cooling element, the at least one battery cell busbar, and/or heat producing hotspot area of the battery cell casing, wherein the thermal interface material comprising thermal conductive adhesive or filling material configured to integrate thermal conductivity and fixing the battery cells together and/or the cooling element to the battery cells.

13. A battery pack comprising a system according to any of claims 1 to 12.

14. A method for assembling a system for a battery pack thermal management, wherein the method comprise
arranging at least one cell stack within an interior space of a battery pack housing, wherein the at least one cell stack comprises a plurality of battery cells arranged in the cell stack;
arranging a cooling element to at least on a top face of the battery cells, wherein the cooling element comprising a first heat exchange surface and second heat exchange surface opposite the first heat exchange surface, and wherein the cooling element comprising at least one extension arranged on the first exchange surface, wherein the extension of the cooling element comprising at least one fin;
configure the first heat exchange surface to be in thermal contact with at least one battery cell busbar and heat producing hotspot area of a battery cell casing;
configure the second heat exchange surface to be in thermal contact with at least one electrical circuit component of the at least one battery cell; and
configure thermal energy conduction from the at least one battery cell busbar, heat producing hotspot area of the battery cell, and at least one electrical circuit component to the cooling element.

## Patentansprüche

1. Ein System zum Wärmemanagement von Batteriepaketen, bei dem das Batteriepaket mindestens einen Zellenstapel umfasst, der eine Vielzahl von Batteriezellen enthält, die in dem Zellenstapel angeordnet sind, wobei das System umfasst
ein Kühlelement, das mindestens auf einer oberen Fläche der Batteriezellen angeordnet ist und eine erste Wärmeaustauschfläche und eine zweite Wärmeaustauschfläche umfasst, die der ersten gegenüberliegt, wobei
das Kühlelement mindestens eine Erweiterung aufweist, die an der ersten Austauschfläche angeordnet ist;
die erste Wärmeaustauschfläche so konfiguriert ist, dass sie in thermischem Kontakt mit mindestens einer Batteriezellen-Sammelschiene und einem wärmeerzeugenden Hotspot-Bereich des Batteriezellengehäuses steht;
die zweite Wärmeaustauschfläche so konfiguriert ist, dass sie in thermischem Kontakt mit mindestens einer Schaltkreiskomponente des Batteriepakets steht;
thermische Energie so konfiguriert ist, dass sie von der mindestens einen Batteriezellen-Sammelschiene, dem wärmeerzeugenden Hotspot-Bereich der Batteriezellen und mindestens einer Schaltkreiskomponente zum Kühlelement geleitet wird; und
die Erweiterung des Kühlelements mindestens eine Lamelle umfasst.

2. Das System nach Anspruch 1, wobei die erste Wärmeaustauschfläche darüber hinaus so konfiguriert ist, dass sie in thermischem Kontakt mit Klemmen der Batteriezelle steht.

3. Das System nach Anspruch 1 oder Anspruch 2, wobei die mindestens eine Stromkreiskomponente mindestens eines der Folgenden umfasst: Sicherungen, Verbindungsstücke, Sammelschienen, Schütze und/oder Leiterplatten.

4. Das System nach einem der Ansprüche 1 bis 3, wobei das Kühlelement darüber hinaus mindestens einen Wärmeleitkanal umfasst, der so konfiguriert ist, dass er einen Flusskanal für ein thermisches Übertragungsmedium bildet, und
der Wärmeleitkanal ist so konfiguriert, dass er zwischen der ersten und zweiten Wärmeaustauschfläche angeordnet, oder
auf der ersten oder zweiten Wärmeaustauschfläche angeordnet ist.

5. Das System nach einem der Ansprüche 1 bis 4, wobei das Kühlelement hergestellt ist
aus mindestens zwei Metallblechen, die zusammengefügt sind, wobei der Wärmeleitkanal zwischen den mindestens zwei Metallblechen ausgebildet wird; oder
durch Aluminiumextrusion mit einer bearbeiteten Nut, wobei
ein Rohr so konfiguriert ist, dass es in die Nut eingepresst wird, um den Wärmeleitkanal zu bilden; oder
ein Deckel auf die Nut aufgesetzt wird, um den Wärmeleitkanal zu bilden; oder
die Nut teilweise durch den Deckel ausgebildet werden kann.

6. Das System nach einem der vorherigen Ansprüche, wobei die mindestens eine Lamelle so konfiguriert ist, dass sie
zumindest teilweise mindestens eine Endfläche der mindestens einen Batteriezelle abdeckt, und
in thermischem Kontakt mit mindestens einem Hotspot-Bereich der mindestens einen Batteriezellen-Endfläche steht.

7. Das System nach einem der vorherigen Ansprüche, wobei die mindestens eine Lamelle mindestens einen Wärmeleitkanal umfasst.

8. Das System nach einem der Ansprüche 1 bis 7, wobei das System Grenzflächenmaterial zwischen dem Kühlelement und
der mindestens einen Batteriezellen-Sammelschiene und/oder dem wärmeerzeugenden Hotspot-Bereich der Batteriezellen; und/oder
den Schaltkreiskomponenten umfasst.

9. Das System nach Anspruch 8, wobei das Grenzflächenmaterial wärmeleitendes Füllmaterial und/oder elektrisch isolierendes Material umfasst, das zwischen dem Kühlelement und
mindestens einer Batteriezellen-Sammelschiene und/oder dem wärmeerzeugenden Hotspot-Bereich der Batteriezellen; und/oder
den Schaltkreiskomponenten des Batteriepakets positioniert ist.

10. Das System nach Anspruch 9, wobei
das wärmeleitende Füllmaterial mindestens eines der Folgenden umfasst: Aushärtepaste, Spaltfüller, Spaltpad und/oder Klebstoff; und/oder
das elektrisch isolierende Material dünne Folie, Polymer und/oder Farbe umfasst.

11. Das System nach einem der Ansprüche 1 bis 10, wobei das Kühlelement ein Befestigungselement der Batteriezellen oder Teil eines Batteriezellen-Befestigungssystems ist.

12. Das System nach Anspruch 11, wobei das System Grenzflächenmaterial zwischen dem Kühlelement, der mindestens einen Batteriezellen-Sammelschiene und/oder dem wärmeerzeugenden Hotspot-Bereich des Batteriezellengehäuses umfasst, wobei das thermische Grenzflächenmaterial wärmeleitenden Klebstoff oder Füllmaterial umfasst, das so konfiguriert ist, dass es thermische Leitfähigkeit integriert und die Batteriezellen und/oder das Kühlelement an die Batteriezellen zusammengefügt.

13. Ein Batteriepaket, das ein System nach einem der Ansprüche 1 bis 12 umfasst.

14. Ein Verfahren zum Zusammenbauen eines Systems für das Wärmemanagement eines Batteriepakets, wobei das Verfahren umfasst
das Anordnen von mindestens einem Zellenstapel innerhalb eines Innenraums eines Batteriepaketgehäuses, wobei der mindestens eine Zellenstapel eine Vielzahl von Batteriezellen umfasst, die im dem Zellenstapel angeordnet sind;
das Anordnen eines Kühlelements zumindest an einer Oberseite der Batteriezellen, wobei das Kühlelement eine erste Wärmeaustauschfläche und eine zweite, der ersten gegenüberliegende Wärmeaustauschfläche umfasst, und wobei das Kühlelement mindestens eine Erweiterung aufweist, die an der ersten Austauschfläche angeordnet ist, wobei die Erweiterung des Kühlelements mindestens eine Lamelle umfasst;
das Konfigurieren der ersten Wärmeaustauschfläche, um in thermischem Kontakt mit mindestens einer Batteriezellen-Sammelschiene und einem wärmeerzeugenden Hotspot-Bereich eines Batteriezellengehäuses zu sein;
das Konfigurieren der zweiten Wärmeaustauschfläche, um in thermischem Kontakt mit mindestens einer Schaltkreiskomponente der mindestens einen Batteriezelle zu sein; und
das Konfigurieren der Wärmeenergieleitung von der mindestens einen Batteriezellen-Sammelschiene, dem wärmeerzeugenden Hotspot-Bereich der Batteriezelle und mindestens einer Schaltkreiskomponente zum Kühlelement.

## Revendications

1. Système de gestion thermique de bloc-batterie, dans lequel le bloc-batterie comprend au moins un empilement de cellules comprenant une pluralité de cellules de batterie agencées dans l'empilement de cellules, dans lequel le système comprend
un élément de refroidissement agencé au moins sur une face supérieure des cellules de batterie et comprenant une première surface d'échange de chaleur et une seconde surface d'échange de chaleur opposée à la première surface d'échange de chaleur, dans lequel
l'élément de refroidissement comprenant au moins une extension agencée sur la première surface d'échange ;
la première surface d'échange de chaleur est configurée pour être en contact thermique avec au moins une barre omnibus de cellule de batterie et une zone de point chaud de production de chaleur du boîtier de cellule de batterie ;
la seconde surface d'échange de chaleur est configurée pour être en contact thermique avec au moins un composant de circuit électrique du bloc-batterie ;
l'énergie thermique est configurée pour être conduite à partir de la au moins une barre omnibus de cellule de batterie, de la zone de point chaud de production de chaleur des cellules de batterie, et d'au moins un composant de circuit électrique vers l'élément de refroidissement ; et
l'extension de l'élément de refroidissement comprenant au moins une ailette.

2. Système selon la revendication 1, dans lequel la première surface d'échange de chaleur est en outre configurée pour être en contact thermique avec des bornes de cellule de batterie.

3. Système selon la revendication 1 ou la revendication 2, dans lequel le au moins un composant de circuit électrique comprend au moins un des éléments suivants : des fusibles, des connecteurs, des barres omnibus, des contacteurs et/ou des cartes de circuit.

4. Système selon l'une quelconque des revendications 1 à 3, dans lequel l'élément de refroidissement comprend en outre au moins un canal de transfert thermique configuré pour former un canal d'écoulement pour un médium de transfert thermique, et
le canal de transfert thermique est configuré pour être situé
entre les première et seconde surfaces d'échange de chaleur, ou
sur la première ou la seconde surface d'échange de chaleur.

5. Système selon l'une quelconque des revendications 1 à 4, dans lequel l'élément de refroidissement est constitué
d'au moins deux feuilles de métal reliées ensemble, dans lequel le canal de transfert thermique est formé entre les au moins deux feuilles de métal ; ou
par extrusion d'aluminium avec une rainure usinée, dans lequel
un tuyau est configuré pour être pressé dans la rainure afin de former le canal de transfert thermique ; ou
un couvercle est ajouté sur la rainure pour former le canal de transfert thermique ; ou
la rainure peut être formée en partie par le couvercle.

6. Système selon l'une quelconque des revendications précédentes, dans lequel la au moins une ailette est configurée pour
couvrir au moins partiellement au moins une face d'extrémité de l'au moins un élément de batterie, et
être en contact thermique avec au moins une zone de point chaud de la au moins une face d'extrémité de cellule de batterie.

7. Système selon l'une quelconque des revendications précédentes, dans lequel la au moins une ailette comprend au moins un canal de transfert thermique.

8. Système selon l'une quelconque des revendications 1 à 7, dans lequel le système comprend un matériau d'interface entre l'élément de refroidissement et
la au moins une barre omnibus de cellule de batterie et/ou la zone de point chaud de production de chaleur des cellules de batterie ; et/ou
les composants de circuit électrique.

9. Système selon la revendication 8, dans lequel le matériau d'interface comprend un matériau de remplissage conducteur de chaleur et/ou un matériau électriquement isolant positionné entre l'élément de refroidissement et
la au moins une barre omnibus de cellule de batterie et/ou la zone de point chaud de production de chaleur des cellules de batterie ; et/ou
les composants de circuit électrique du bloc-batterie.

10. Système selon la revendication 9, dans lequel
le matériau de remplissage thermoconducteur comprend au moins l'un des éléments suivants : pâte de durcissement, matériau de remplissage d'espace, tampon d'espace et/ou adhésif ; et/ou
le matériau électriquement isolant comprenant une feuille mince, un polymère et/ou une peinture.

11. Système selon l'une quelconque des revendications 1 à 10, dans lequel l'élément de refroidissement est un élément de fixation des cellules de batterie ou une partie d'un système de fixation de cellule de batterie.

12. Système selon la revendication 11, dans lequel le système comprend un matériau d'interface entre l'élément de refroidissement, la au moins une barre omnibus de cellule de batterie et/ou la zone de point chaud de production de chaleur du boîtier de cellule de batterie, dans lequel le matériau d'interface thermique comprend un adhésif conducteur thermique ou un matériau de remplissage configuré pour intégrer la conductivité thermique et fixer les éléments de batterie ensemble et/ou l'élément de refroidissement aux cellules de batterie.

13. Bloc-batterie comprenant un système selon l'une quelconque des revendications 1 à 12.

14. Procédé d'assemblage d'un système de gestion thermique de bloc-batterie, dans lequel le procédé comprend les étapes de
agencer au moins un empilement de cellules à l'intérieur d'un espace intérieur d'un boîtier de bloc-batterie, dans lequel le au moins un empilement de cellules comprend une pluralité de cellules de batterie agencées dans l'empilement de cellules ;
agencer un élément de refroidissement sur au moins une face supérieure des éléments de batterie, dans lequel l'élément de refroidissement comprend une première surface d'échange de chaleur et une seconde surface d'échange de chaleur opposée à la première surface d'échange de chaleur, et dans lequel l'élément de refroidissement comprend au moins une extension agencée sur la première surface d'échange, dans lequel l'extension de l'élément de refroidissement comprend au moins une ailette ;
configurer la première surface d'échange de chaleur pour qu'elle soit en contact thermique avec au moins une barre omnibus de cellule de batterie et une zone de point chaud de production de chaleur d'un boîtier de cellule de batterie ;
configurer la seconde surface d'échange de chaleur pour qu'elle soit en contact thermique avec au moins un composant de circuit électrique de la au moins une cellule de batterie ; et
configurer une conduction d'énergie thermique à partir de la au moins une barre omnibus de cellule de batterie, de la zone de point chaud de production de chaleur de la cellule de batterie et d'au moins un composant de circuit électrique vers l'élément de refroidissement.
